(19) Europäisches Patentamt
European Patent Office
Office européen des brevets

(11) **EP 2 545 099 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(51) Int Cl.:
***C08G 65/00*** *(2006.01)*

(21) Anmeldenummer: **11706279.4**

(22) Anmeldetag: **04.03.2011**

(86) Internationale Anmeldenummer:
**PCT/EP2011/053272**

(87) Internationale Veröffentlichungsnummer:
**WO 2011/110484 (15.09.2011 Gazette 2011/37)**

(54) **VERFAHREN ZUR HERSTELLUNG VON POLYETHER-POLYOLEN**

METHOD FOR PRODUCING POLYETHER POLYOLS

PROCÉDÉ DE PRODUCTION DE POLYÉTHERS POLYOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.03.2010 EP 10155882**

(43) Veröffentlichungstag der Anmeldung:
**16.01.2013 Patentblatt 2013/03**

(73) Patentinhaber: **BASF SE**
**67056 Ludwigshafen (DE)**

(72) Erfinder:
• **AHMADNIAN, Fatemeh**
**67061 Ludwigshafen (DE)**
• **CHILEKAR, Vinit**
**68161 Mannheim (DE)**
• **BRODHAGEN, Andreas**
**67311 Tiefenthal (DE)**
• **LÖFFLER, Achim**
**67346 Speyer (DE)**
• **GRAF, Hermann**
**67112 Mutterstadt (DE)**

(56) Entgegenhaltungen:
**EP-A1- 1 327 650     EP-A2- 1 258 502**
**US-A- 4 396 780**

**Beschreibung**

Einführung

Die vorliegende Erfindung betrifft ein Verfahren zur Herstellung von Polyether-Polyolen (PEOLen) unter Verwendung definierter Rührleistungs-Einträge zur Erzielung hoher Batch-zu-Batch-Konsistenz.
Gegenstand der vorliegenden Erfindung ist das Verfahren gemäß Anspruch 1.

Hintergrund

Die Herstellung von Polyetheralkoholen ist in M. Ionescu, "Chemistry and technology of polyols for polyurethanes", Rapra Technology, 2005 beschrieben.
Häufig verwendete Alkylenoxid-Ausgangsprodukte für die Herstellung von Polyetheralkoholen sind Propylenoxid (PO) und/ oder Ethylenoxid (EO).
Bei der Herstellung von PEOLen, insbesondere bei der satzweisen Herstellung, kommt es immer wieder zu Abweichungen von Charge zu Charge. Die Abweichungen machen sich bei Weichschaumpolyolen vor allem in der Konzentration der ungesättigten Monole und der Molekulargewichtsverteilung bemerkbar und wirken sich auf die Verarbeitung und die mechanischen Eigenschaften der hieraus hergestellten Polyurethane aus. Bei Hartschaumpolyolen werden oft zu hohe Zuckerkonzentrationen beobachtet, die bei der Verarbeitung zu Polyurethanen an den Schäummaschinen Ablagerungen verursachen. Wird im Rahmen der Qualitätskontrolle der Herstellprozeß mit sog. Kontrollkarten nach Shewhart überprüft, so ergeben sich Verletzungen der Six Sigma-Regel sowie der Trendregeln, beispielsweise der sog. Western Electric-Regel. Die Vorgehensweise ist z.B. beschrieben in Douglas C. Montgomery, Introduction to Statistical Quality Control, 6. Auflage 2008, Wiley & Sons, New York, ISBN 0470169923. Abweichungen von diesen Regeln zeigen an, daß im Prozeß gerichtete, keine zufälligen, Schwankungen vorliegen, was bedeutet, daß der Herstellprozeß unvollständig kontrolliert wird.
Diese Probleme können in manchen Fällen auf eine ungenügende Durchmischung des Reaktorinhalts zurückgeführt werden.
Ungenügende Durchmischung bringt weiterhin die folgenden Nachteile mit sich:

a) das bei den üblichen Reaktionsbedingungen gasförmig vorliegende Alkylenoxid kommt nicht gleichmäßig mit allen Reaktionspartnern, d.h. im wesentlichen den Startern, in Kontakt, was Diskriminierung beim Kettenaufbau und damit abweichende Produkteigenschaften als Folge hat,

b) der Stoffübergang Gas/Flüssig ist erschwert, was verlängerte Reaktions- und Kesselbelegzeiten bewirkt,

c) der Wärmeübergang ist behindert; wird dies nicht bei der Fahrweise berücksichtigt, resultiert unerwünschte Überhitzung des Reaktionsgemisches, insbesondere eine lokale Überhitzung, oder bei Berücksichtigung muss die Geschwindigkeit der Alkylenoxid-Dosierung herabgesetzt werden, was die Reaktionsdauer und damit die Kesselbelegzeit erhöht,

d) im Falle von Überhitzung durch c) kann bei Verwendung eines DMC-Katalysators dieser teilweise oder ganz desaktiviert werden; insbesondere bei KOH-Katalyse kann der Gehalt an ungesättigten Bestandteilen, den sog. Monolen, ansteigen;

e) bei Zuckerpolyolen kann der Restzuckergehalt im fertigen Polyol erhöht sein und Produkttrübungen verursachen,

f) desweiteren kann bei Überhitzung ein instabiler Betriebszustand eintreten, was im Extremfall eine Durchgehreaktion nach sich ziehen kann.

In der vorhandenen Literatur, z. B. in M. Ionescu, Chemistry and Technology of Polyols for Polyurethanes, Rapra Technology Limited, Shawbury / UK, 2005, S. 336 ff., sowie in M. Baems, A. Behr, A. Brehm, J. Gmehling, H. Hofmann, U. Onken, Ullmann's Encyclopedia of Industrial Chemistry, New York, 5th ed., Vol. A21, S. 665, wurden die genannten Probleme bisher nicht zureichend gelöst.
Es stellte sich somit die Aufgabe, ein Verfahren zur Herstellung von Polyether-Polyolen bereitzustellen, das die oben erwähnten Nachteile soweit wie möglich vermeidet.

Beschreibung der Erfindung

Die gestellte Aufgabe wird durch das erfindungsgemäße Verfahren zur Herstellung von Polyether-Polyolen gelöst, indem definierte Rührleistungs-Einträge, wie in Anspruch 1 angegeben, verwendet werden.

Die oben beschriebenen Probleme, die bei konventionellen Verfahren auftreten, werden durch das erfindungsgemäße Verfahren zur Herstellung von Polyether-Polyolen (PEOLen) unter Verwendung definierter Rührleistungs-Einträge vermieden. Somit kann eine hohe Batch-zu-Batch-Konsistenz gewährleistet werden, d. h. die für PolyetherPolyole wichtigen Kennzahlen der OH-Zahl und der Viskosität variieren von Batch zu Batch nur geringfügig.

Der Gegenstand der Erfindung ist somit ein Verfahren zur katalytischen Herstellung von Polyetherolen gemäß Anspruch 1.

Nach dem hier offenbarten Verfahren wird beim Herstellprozess eine hinreichende Durchmischung der Reaktionsmischung sichergestellt. Die Durchmischung kann durch Rühren oder Umpumpen, oder durch Kombination von Rühren und Umpumpen erzielt werden. Als Kriterien für eine gute Durchmischung dienen der auf das Reaktorvolumen bezogene Leistungseintrag und die Umpumprate, wobei letztere auch als äquivalenter Leistungseintrag ausgedrückt werden kann.

A) Einsatzmaterialien:

Für den Prozess kommen zum Beispiel folgende Starter in Frage:

a) ein- und mehrwertige Alkohole mit Funktionalität F = 1-8, zum Beispiel MEG (Monoethylenglykol), DEG (Diethylenglykol), TEG (Trietylenglykol), PEG (Poylethylenglykol); MPG (Monopropylenglykol), DPG (Diproplyenglykol), TPG (Tripropylenglykol), PPG (Polypropylenglykol); PTHF (Polytetrahydrofuran), Glycerin, Glycerin-Alkoxilat mit Molmasse < 10000, TMP (Trimethylolpropan), TME, (Trimethylolethan), NPG (Neopentylglykol), Allylalkohol-Alkoxilat mit Molmasse < 1000, Zucker und Zuckerderivate wie Saccharose oder Sorbit, Bisphenol A, Bisphenol F, Pentaerythrit, abgebaute Stärke, Wasser, Mischungen davon,
b) ein- und mehrwertige Amine, wie Ethylendiamin, Triethanolamin oder Toluylendiamin,
c) Hydroxycarbonsäuren, Hydroxyaldehyde, Hydroxyketone; Tridecanol N und Polymerisate davon; Ester der Acrylsäure und Methacrylsäure mit difunktionellen Alkoholen wie HEA (Hydroxyethylacrylat), HPA (Hydroxypropylacrylat), HEMA (Hydroxyethylmethacrylat), HPMA (Hydroxypropylmethacrylat), Vinylether wie HBVE (Hydroxybutylvinylether); Isoprenol; Polyesterole; niedere Alkoxilate der obengenannten Starter, insbesondere von Sucrose, Sorbitol; Polyesterole,
d) Pflanzenöle mit Hydroxylgruppen, wie Rizinusöl, oder Pflanzenöle, in die durch chemische Modifikation Hydroxylgruppen eingeführt wurden, wie Sojaöl.

Die Starter können zu Reaktionsbeginn vorgelegt oder ggf. auch während des Prozesses zudosiert werden, wobei dies ganz oder teilweise erfolgen kann.

Als Alkylenoxid werden vorzugsweise Propylenoxid, Ethylenoxid, Butylenoxid, Isobutylenoxid, Styroloxid oder Mischungen aus mindestens zwei der genannten Alkylenoxide eingesetzt. Vorzugsweise wird als Alkylenoxid Propylenoxid, Ethylenoxid oder Mischungen aus Propylenoxid und Ethylenoxid eingesetzt. Besonders bevorzugt wird als Alkylenoxid Propylenoxid eingesetzt.

Der Prozeß kann als statistische oder als Block-Copolymerisation bei Verwendung unterschiedlicher Alkylenoxide durchgeführt werden.

Als Katalysatoren werden üblicherweise basische Verbindungen eingesetzt. Dabei handelt es sich üblicherweise um tertiäre Amine und/oder Hydroxide von Alkali- und Erdalkalimetallen. Beispiele für aminische Katalysatoren sind Trimethylamin (TMA), Tributylamin, Triethylamin (TEA), Dimethylethanolamin (DMEOA) und Dimethylcyclohexylamin (DMCHA), Imidazol und substituierte Imidazolderivate, vorzugsweise Dimethylethanolamin. Beispiele für die Hydroxide sind Kaliumhydroxid, Natriumhydroxid, Strontiumhydroxid, Caesiumhydroxid und Kalziumhydroxid. Bevorzugt wird in einer Ausführungsform KOH als Katalysator eingesetzt.

Es kann auch ein Katalysator aus der Gruppe der Multimetallcyanidkatalysatoren eingesetzt werden; bevorzugt sind hierbei Katalysatoren aus der Gruppe der Dimetallcyanidkatalysatoren (DMC-Katalysatoren).

Die genannten Katalysatoren können einzeln oder im Gemisch miteinander eingesetzt werden. Es ist möglich, im kontinuierlichen rückvermischten Reaktor und im weiteren Reaktor die gleichen oder unterschiedliche Katalysatoren zu verwenden.

Die Zugabe der Gesamtmenge des Katalysators kann zu Reaktionsanfang oder in Teilen verteilt über die Reaktionsdauer erfolgen.

Die Ausführung des erfindungsgemäßen Verfahrens ist als Batch, Semibatch, oder kontinuierlicher Prozess möglich.

B) Apparaturen:

Angaben hierzu finden sich z.B. in M. Ionescu, Chemistry and Technology of Polyols for Polyurethanes, Rapra Technology Limited, Shawbury/UK, 2005, S. 336 ff., sowie in M. Baerns, A. Behr, A. Brehm, J. Gmehling, H. Hofmann, U. Onken, Ullmann's Encyclopedia of Industrial Chemistry, New York, 5th ed., Vol. A21, S. 665.

Beispielsweise kann das erfindungsgemäße Verfahren in einem Rührkessel durchgeführt werden, wobei der Rührkessel mit mindestens einem innen liegenden und/oder mit mindestens einem außen liegenden Wärmetauscher ausgerüstet sein kann.

C) Leistungseintrag:

Der spezifische Leistungseintrag, in kW/m$^3$, bezogen auf das Reaktorvolumen, errechnet sich in Abhängigkeit von Rührertyp, Rührerabmessungen, Reaktorabmessungen, Viskosität der Reaktionsmasse und Drehzahl in Anwesenheit von Strömungsbrechern nach M. Zlokarnik, Rührtechnik, Theorie und Praxis, Springer Verlag Berlin 1999, zu:

$$P = Ne * n^3 * d^5 * \rho \qquad \text{(Formel 1)},$$

wobei Ne die Newton-Zahl, n die Rührgeschwindigkeit (in Upm), d der Rührerdurchmesser und $\rho$ die Dichte des Reaktionsinhalts sind. Die Newton-Zahl kann dem Buch von Zlokarnik (S. 75-78) entnommen werden.

Alternativ lässt sich der Leistungseintrag aus der Umpumprate (in m$^3$/h), bezogen auf das Reaktorvolumen (in m$^3$), demnach in m$^3$/h/m$^3$, wie folgt ermitteln:

$$P = \Delta p * \dot{m} \qquad \text{(Formel 2)},$$

wobei $\Delta p$ der Druckabfall zwischen Pumpenausgang und Eintritt in den Reaktor (in Pa) und $\dot{m}$ die Flußrate (in m$^3$/s) sind.

Die Umpumprate kann somit auch durch einen Leistungseintrag angegeben werden; wenn z. B. die Umpumprate, bezogen auf das Reaktorvolumen, innerhalb des erfindungsgemäßen Bereichs zwischen 3 und 150 m$^3$/h/m$^3$ liegt, bevorzugt zwischen 4 und 100 m$^3$/h/m$^3$, ganz bevorzugt zwischen 5 und 80 m$^3$/h/m$^3$, dann liegt der Leistungseintrag durch das angegebene Umpumpen, bezogen auf das Reaktorvolumen, im Bereich zwischen 0,001 und 1 kW/m$^3$, bevorzugt zwischen 0,002 und 0,5 kW/m$^3$, ganz bevorzugt zwischen 0,003 und 0,25 kW/m$^3$.

Der Eintrag der Rührleistung kann entweder durch den Rührer, oder sowohl durch Rühren als auch Umpumpen erfolgen, und während des Ablaufs der Reaktion nach der einen oder anderen Weise, ggf. wechselnd, erfolgen, je nachdem, was die Reaktionsführung erfordert.

Insbesondere bei niedrigem Füllstand des Reaktors, d.h. für die Alkoxilierungsreaktion zu Anfang, kann es erforderlich sein, nur auf eine der genannten Weisen zu durchmischen, und Rührerdrehzahl oder Umpumprate später anzupassen.

Im beanspruchten Verfahren wird zusätzlich ein Strömungsbrecher verwendet. Strömungsbrecher sind strömungsbrechende Einbauten in Rührkesseln. Sie verhindern das Mitrotieren des durch das zentrische Rührwerk bewegten Fluids im Rührkessel und sind in der Regel an der Behälterwand angebracht.

Das erfindungsgemäße Verfahren zur katalytischen Herstellung von Polyetherolen wird somit mit mindestens einem Strömungsbrecher durchgeführt.

Das erfindungsgemäße Verfahren zur katalytischen Herstellung von Polyetherolen kann so durchgeführt werden, dass mindestens ein Strömungsbrecher und keine Pumpe verwendet wird und wobei der Leistungseintrag durch mindestens einen Rührer, bezogen auf das Reaktorvolumen, im Bereich von 1 bis 4 kW/m$^3$, bevorzugt von 1,2 bis 3,5 kW/m$^3$, liegt.

Das erfindungsgemäße Verfahren zur katalytischen Herstellung von Polyetherolen kann auch so durchgeführt werden, dass mindestens ein Strömungsbrecher verwendet wird und wobei der kombinierte Leistungseintrag durch mindestens einen Rührer und mindestens eine Pumpe, bezogen auf das Reaktorvolumen, im Bereich von 1,002 bis 4,5 kW/m$^3$, bevorzugt von 1,203 bis 3,75 kW/m$^3$ liegt.

Die Umsetzung der Startsubstanz mit den Alkylenoxiden wird in der Regel bei den hierfür üblichen Drücken im Bereich zwischen 0,1 und 1,0 MPa und den üblichen Temperaturen im Bereich zwischen 80 und 140 °C durchgeführt.

An die Dosierung der Alkylenoxide schließt sich zumeist eine Nachreaktionsphase zum vollständigen Abreagieren der Alkylenoxide an. Der so erhaltene Rohpolyetheralkohol wird durch Destillation, vorzugsweise unter Vakuum, von nicht umgesetztem Alkylenoxid und leicht flüchtigen Verbindungen befreit, entwässert sowie durch Säureneutralisation und Abtrennung der entstandenen Salze aufgearbeitet.

Wenn als Katalysatoren Amine eingesetzt werden, können diese im Polyol verbleiben. Dies gilt auch für DMC-Katalysatoren.

Hierin beschrieben sind auch Polyetherole die herstellbar sind nach dem erfindungsgemäßen Verfahren zur katalytischen Herstellung von Polyetherolen.

Die nach dem erfindungsgemäßen Verfahren zur katalytischen Herstellung von Polyetherolen herstellbaren Polyetherole werden bevorzugt zur Herstellung von Polyurethanen, vorzugsweise durch Reaktion mit Polyisocyanataen, eingesetzt.

Beispiele

Im Folgenden sollen einige Beispiele zur Erläuterung der Erfindung dargestellt werden. Keinesfalls sollen diese Beispiele den Schutzumfang der vorliegenden Erfindung einschränken; sie sind nur illustrierend zu verstehen.

1) Synthese eines Weichschaum-Polyols [L 2090, BSW]

In einem emaillierten 300 mL-Edelstahlautoklaven, der als Rühreinrichtung zwei in Etagen am Rührerstock angebrachte Vierblattrührer sowie einen Strömungsbrecher aufwies, wurden 2,4 g Glycerin vorgelegt, 1,33 g 45proz. wässrige Kaliumhydroxid-Lösung zugesetzt, das Gefäß verschlossen und unter Rühren auf 110°C erwärmt. Über einen Zeitraum von ca. 5 h wurden bei 110-115°C 169,4 g reines Propylenoxid über eine Druckleitung zudosiert. Anschließend ließ man 2 h nachreagieren. Danach entspannte man, spülte 5 min mit Stickstoff und stellte mit Stickstoff einen Druck von 1 bar ein. Nun wurden 28,2 g reines Ethylenoxid bei 110-115°C binnen 0,5 h eingeleitet und eine ebenso lange Nachreaktionszeit abgewartet. Dann neutralisierte man das eingesetzte Kaliumhydroxid mit Salzsäure. Anschließend wurde Vakuum angelegt und gleichzeitig ein schwacher Stickstoffstrom eingeleitet. Daraufhin wurde der Ansatz über ein Plattenfilter gepumpt. Vom fertigen Produkt bestimmte man die OH-Zahl, die Viskosität und die Jodzahl.

a) Versuch mit niedrigem Rührleistungs-Eintrag: (nicht erfindungsgemäß) Die oben beschriebene Alkoxilierung wurde mit einer Rührerdrehzahl von 547 Umdrehungen pro Minute (Upm) durchgeführt, was einer spezifischen Rührleistung von 0,3 kW/m$^3$ bei einer Viskosität der Reaktionsmasse von 50 mPa*s entspricht.

b) Versuch mit hohem Rührleistungs-Eintrag:

Versuch a) wurde mit 1400 Upm gefahren, entsprechend einer spezifischen Rührleistung von 3,5 kW/m$^3$ bei einer Viskosität der Reaktionsmasse von 50 mPa*s .

Analysenwerte:

| | Versuch 1a) | Versuch 1b) |
|---|---|---|
| OH-Zahl [mg KOH/g] | 29,7 | 28 |
| Viskosität [mPa*s, 25°C] | 1020 | 1130 |
| Jodzahl [g I$_2$/100 g] | 2,5 | 1,8 |

Die Analysen wurde dabei nach folgenden Methoden durchgeführt:

- OH-Zahl: DIN 53240-2 (DIN = deutsche Industrienorm)
- Jodzahl: DIN 53241-1, oder DGF-V11/ B (DGF =deutsche Gesellschaft für Fettwissenschaft)
- Viskosität: DIN 53019-1

2) Synthese eines Hartschaum-Polyols [analog Beispiel 1 aus DE 10322784, S. 8]

In einem 300 mL-Edelstahlautoklaven, der als Rühreinrichtung zwei in Etagen am Rührerstock angebrachte Vierblattrührer sowie einen Strömungsbrecher aufwies, wurden 35,3 g Glycerin vorgelegt, auf 90°C erwärmt, 1,33 g N,N-Dimethyl-cyclohexyl-amin, 0,240 g 48proz. Kaliumhydroxid-Lösung und 53,8 g Saccharose-Pulver vorgelegt und durch Rühren gemischt. Anschließend wurde 200 g Propylenoxid eingeleitet dergestalt, dass der Druck 7 bar nicht überstieg. Die Temperatur ließ man dabei auf 115°C steigen. Es schloss sich eine Nachreaktionsphase von 5 Std. bei 115°C an. Danach wurde für 30 min Vakuum angelegt, neutralisiert und filtriert.

a) Versuch mit niedrigem Rührleistungs-Eintrag: (nicht erfindungsgemäß) Die oben beschriebene Alkoxilierung wurde mit einer Rührerdrehzahl von 116 Umdrehungen pro Minute (Upm) durchgeführt, was einer spezifischen Rührleistung von 0,3 kW/m$^3$ bei einer Viskosität der Reaktionsmasse von 2000 mPa*s entspricht.

b) Versuch mit hohem Rührleistungs-Eintrag:

Versuch b) wurde mit 397 Upm gefahren, entsprechend einer spezifischen Rührleistung von 3,5 kW/m$^3$ bei einer Viskosität der Reaktionsmasse von 2000 mPa*s.

Analysenwerte:

|  | Versuch 2a) | Versuch 2b) |
|---|---|---|
| OH-Zahl [mg KOH/g] | 480 | 492 |
| Viskosität [mPa*s, 25°C] | 9250 | 9830 |
| Rest-Saccharose [g/100 g] | 0,12 | <0,05 |

3) Synthese eines Hartschaum-Polyols mit verschiedenen Umpumpraten [analog Beispiel 1 aus DE 10322784, S. 8]

Die Synthese des unter 2) beschriebenen Hartschaum-Polyols wurde wiederholt, jedoch wurde nicht durch Rühren, sondern durch Umpumpen gemischt.

a) Versuch mit niedriger Umpumprate (nicht erfindungsgemäß)
Die oben beschriebene Alkoxilierung wurde mit einer Umpumprate von 5 m$^3$/h/m$^3$ durchgeführt, entsprechend einem Leistungseintrag von 0,003 kW/m$^3$.

b) Versuch mit hoher Umpumprate (nicht erfindungsgemäß)
Der Versuch wurde wie unter a) gefahren, jedoch mit einer Umpumprate von 80 m$^3$/h/m$^3$, was einem Leistungseintrag von 0,25 kW/m$^3$ gleichkommt.

Analysenwerte:

|  | Versuch 3a) | Versuch 3b) |
|---|---|---|
| OH-Zahl [mg KOH/g] | 475 | 492 |
| Viskosität [mPa*s, 25°C] | 9180 | 9830 |
| Rest-Saccharose [g/100 g] | 0,14 | < 0,05 |

Aus den Versuchsergebnissen kann unter anderem abgeleitet werden, dass der Gehalt an ungesättigten Bestandteilen, der an der Jodzahl erkennbar ist, bzw. der Restzuckergehalt bei definierten, insbesondere höheren Rührleistungseinträgen kleiner ist. Zudem kann bei Anwendung des erfindungsgemäßen Verfahrens eine engere Molmassenverteilung erreicht werden, was an den niedrigeren Viskositäten ersichtlich ist.

Die Beispiele zeigen somit die Überlegenheit des vorliegenden Verfahrens gegenüber den konventionellen Verfahren.

**Patentansprüche**

1. Verfahren zur katalytischen Herstellung von Polyetherolen, **dadurch gekennzeichnet, dass** der Leistungseintrag (1) durch mindestens einen Rührer oder (11) durch mindestens einen Rührer und eine Pumpe, bezogen auf das Reaktorvolumen, im Bereich (1) von 1 bis 4 kW/m$^3$ oder (11) von 1,002 bis 4,5 kW/m$^3$ liegt, wobei in beiden Fallen mindestens ein Strömungsbrecher verwendet wird, und wobei (I) keine Pumpe verwendet wird und wobei der Leistungseintrag durch mindestens einen Rührer, bezogen auf das Reaktorvolumen, im Bereich von 1 bis 4 kW/m$^3$, bevorzugt von 1,2 bis 3,5 kW/m$^3$ liegt, oder (Ii) wobei der kombinierte Leistungseintrag durch mindestens einen Rührer und mindestens eine Pumpe, bezogen auf das Reaktorvolumen, im Bereich von 1,002 bis 4,5 kW/m$^3$, bevorzugt von 1,203 bis 3,75 kW/m$^3$ liegt, wobei sich der spezifische Leistungseintrag P, bei Verwendung eines Rührers, bezogen auf das Reaktorvolumen, nach der Formel $P = Ne * n^3 * d^5 * p$ berechnet, wobei Ne die Newton-Zahl, n die Rührgeschwindigkeit in Upm, d der Rührerdurchmesser und $p$ die Dichte des Reaktionsinhalts ist, und wobei sich der spezifische Leistungseintrag P, bezogen auf das Reaktorvolumen, bei Verwendung einer Pumpe, nach der Formel $P = \Delta p * \dot{m}$ berechnet, wobei $\Delta p$ der Druckabfall zwischen Pumpenausgang und Eintritt in den Reaktor (in Pa) und $\dot{m}$ die Flußrate (in m$^3$/s) ist.

**Claims**

1. A process for the catalytic preparation of polyetherols, wherein the power input (1) by means of at least one stirrer or (11) by means of at least one stirrer and one pump, based on the reactor volume, is in the range (1) from 1 to 4 kW/m$^3$ or (11) from 1.002 to 4.5 kW/m$^3$, where in both cases at least one baffle is used and **(i)** no pump is used and the power input by means of at least one stirrer, based on the reactor volume, is in the range from 1 to 4 kW/m$^3$, preferably from 1.2 to 3.5 kW/m$^3$, **or (ii)** the combined power input by means of at least one stirrer and at least one pump, based on the reactor volume, is in the range from 1.002 to 4.5 kW/m$^3$, preferably from 1.203 to 3.75 kW/m$^3$, where the specific power input P when using a stirrer, based on the reactor volume, is calculated according to the formula $P = Ne * n^3 * d^5 * \rho$, where Ne is the Newton number, n is the stirrer speed in rpm, d is the stirrer diameter and p is the density of the reaction mixture, and the specific power input P, based on the reactor volume, when using a pump is calculated according to the formula $P = \Delta p * \dot{m}$, where $\Delta p$ is the pressure drop between the pump outlet and the entry into the reactor (in Pa) and $\dot{m}$ is the flow rate (in m$^3$/s).

**Revendications**

1. Procédé pour la production catalytique de polyéthérols, **caractérisé en ce que** l'apport de puissance (I) par au moins un agitateur ou (II) par au moins un agitateur et une pompe se situe, par rapport au volume du réacteur, dans la plage (I) de 1 à 4 kW/m$^3$ ou (II) de 1,002 à 4,5 kW/m$^3$, dans les deux cas en utilisant au moins un brise-flux, et (I) en n'utilisant aucune pompe et l'apport de puissance par au moins un agitateur se situant, par rapport au volume du réacteur, dans la plage de 1 à 4 kW/m$^3$, de préférence de 1,2 à 3,5 kW/m$^3$, ou (II) l'apport de puissance combiné par au moins un agitateur et au moins une pompe se situant, par rapport au volume du réacteur, dans la plage de 1,002 à 4,5 kW/m$^3$, de préférence de 1,203 à 3,75 kW/m$^3$, l'apport de puissance spécifique P, dans le cas d'utilisation d'un agitateur, par rapport au volume du réacteur, étant calculé selon la formule $P = Ne * n^3 * d^5 * \rho$, Ne étant le nombre de Newton, n la vitesse d'agitation en tours/min, d le diamètre de l'agitateur et p la densité du contenu du réacteur, et l'apport de puissance spécifique P, par rapport au volume du réacteur, étant calculé, dans le cas d'utilisation d'une pompe, selon la formule $P = \Delta p * m$, $\Delta p$ étant le chute de pression entre la sortie de la pompe et l'entrée dans le réacteur (en Pa) et m le débit (en m$^3$/s).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DOUGLAS C. MONTGOMERY.** Introduction to Statistical Quality Control. Wiley & Sons, 2008
- **M. IONESCU.** Chemistry and Technology of Polyols for Polyurethanes. Rapra Technology Limited, 2005, 336 ff
- **M. BAEMS ; A. BEHR ; A. BREHM ; J. GMEHLING ; H. HOFMANN ; U. ONKEN.** Ullmann's Encyclopedia of Industrial Chemistry. vol. A21, 665
- **M. BAERNS ; A. BEHR ; A. BREHM ; J. GMEHLING ; H. HOFMANN ; U. ONKEN.** Ullmann's Encyclopedia of Industrial Chemistry. vol. A21, 665
- **M. ZLOKARNIK.** Rührtechnik, Theorie und Praxis. Springer Verlag, 1999